# EUROPEAN PATENT SPECIFICATION

(11) **EP 3 703 313 B1**
(45) Date of publication and mention of the grant of the patent: **18.01.2023**
(21) Application number: 20159625.1
(22) Date of filing: 26.02.2020
(51) Int. Cl.: H04L 12/10

(54) **APPARATUS FOR MOVING A CLOSING BARRIER**
VORRICHTUNG ZUM BEWEGEN EINER VERSCHLUSSBARRIERE
APPAREIL POUR DÉPLACER UNE BARRIÈRE DE FERMETURE

(30) Priority: 27.02.2019 IT 201900000673 U
(43) Date of publication of application: 02.09.2020
(73) Proprietor: Key Automation S.r.l., 30027 San Dona' di Piave (VE) (IT)
(72) Inventor: BATTISTUZZI, Angelo, I-30027 San Dona' di Piave (VE) (IT)
(74) Representative: Petraz, Davide Luigi

(56) References cited:
- US-A1- 2006 023 805
- US-A1- 2007 086 755
- GINOT N ET AL: "Application of Power Line Communication for Data Transmission Over PWM Network", IEEE TRANSACTIONS ON SMART GRID, IEEE, USA, vol. 1, no. 2, 1 September 2010 (2010-09-01), pages 178-185, XP011315895, ISSN: 1949-3053
- CHRISTOPHE BATARD ET AL: "Development of a PLC modem for data transmission over a PWM power supply", INTERNATIONAL JOURNAL OF ELECTRONICS., vol. 101, no. 4, 3 April 2014 (2014-04-03) , pages 516-530, XP055705489, GB ISSN: 0020-7217, DOI: 10.1080/00207217.2013.792121

## Description

### Technical field

The present disclosure relates to techniques for providing electric power supply and transmitting data and/or commands in home automation systems.

One or more embodiments may be applied, for example, to an apparatus for moving a closing barrier, preferably for moving a door or a gate, of the type comprising:
a control station for controlling the movement apparatus, said control station comprising a circuit for supplying a pulse-width modulated (PWM) supply voltage to a two-wire communication and supply bus coupled to said control station; and
at least one utilizer device that uses said PWM supply voltage, which is coupled to said two-wire communication bus, said utilizer device comprising a circuit for converting said PWM supply voltage into a supply current for an electric motor, for example of a brushless or brushed type, for moving said closing barrier.

In the context of the present description, the term "closing barrier" may refer in general to gates of any type, road barriers and barriers for car-parks, as well as doors of any type, windows, sky-lights, awnings, roller shutters, brisesoleils, and doors and windows in general.

### Technological background

In the field of home automation, and in particular in the field of automation of gates, doors, and windows, or in general of any device referred to herein as "closing barrier", apparatuses are known for moving such closing barriers, the apparatuses comprising a station for controlling the closing barrier that is able to supply a pulse-width modulated (PWM) supply voltage to the barrier in order to drive an electric motor that brings about movement of the barrier for opening or closing.

In the sequel of the present description, reference will repeatedly be made, purely by way of example, to an apparatus for moving a door or a mobile element of a gate (e.g., a swing leaf or a sliding leaf). Obviously, this specific application is not to be understood in a sense such as to limit the embodiments, it being possible for the present invention to apply to any type of closing barrier as defined previously.

In the framework of automation of gates, doors, or windows, there frequently arises the need to connect the control station also to peripheral devices (for example, sensors and/or actuators), in particular located in the proximity of the electric motor, such as for instance: remote buttons (including wireless buttons) for sending to the control station a request for opening or closing; radio receivers that can be activated by radio transmitters of any type, suitable to impart commands to the control station; electrically activatable locks (so-called electric locks); data input devices, such as alphanumeric keypads for entering safety codes; flasher lamps, stop-and-go lights, or lighting devices in general; sensors for detecting obstacles, such as photosensitive barriers (photoelectric cells with interruption of the light beam) and/or mechanical barriers (gate safety edges);presence sensors; and other devices that the control station governs or the data or commands of which it receives.

Also these peripheral devices can be supplied by the control station itself, for example with a direct current (DC) or an alternate current (AC), or possibly with a PWM supply voltage.

Typically, in known systems, data and/or commands are transmitted by the control station to the peripheral devices and possibly also to the gate-opening motor via a dedicated wired connection, separate from the electrical connection that enables supplying the electric motor of the gate and/or the peripheral device or devices.

This system configuration, which envisages the use of at least two separate electrical lines for transmission of the power supply (whether this be in PWM mode for driving an electric motor or in DC or AC mode for powering a peripheral device) and for transmission of the data, proves particularly disadvantageous in so far as it results in an undesired increase in the number of electrical connections to be made between the control station and the various peripherals of the automation system associated thereto (i.e., the electric motor and possible peripheral sensor/actuator devices).

In particular, the increase in the number of connections to the control station presents the dual disadvantage of requiring a more complex installation procedure of the automation system (with a greater possibility of error by the installer) and of inflating the costs both for production and for installation of the system.
PWM controllers are known to be used to supply voltage to electrical equipment for their operation. It is also known to transmit information over PWM wires. Ginot N. et al. describe a way to allow PLC modems to communicate on a PWM network in "Application of Power Communication for Data Transmission Over PWM Network" (IEEE TRANSACTIONS ON SMART GRID, IEEE, USA, vol. 1, no. 2, 1 September 2010 (2010-09-01), pages 178-185, ISSN: 1949-3053.
US 2007/086755 A1 describes a decoration device with a PWM controlled motor that reduces or eliminates the gearing needed to achieve appropriate speed torque at the motor output shaft.
Batard C. et al. describe transmission of data on power lines of an electric motor PWM-powered in "Development of a PLC modem for data transmission over a PWM power supply", INTERNATIONAL JOURNAL OF ELECTRONICS., vol. 101, no. 4, 3 April 2014 (2014-04-03), pages 516-530, GB ISSN: 0020-7217, DOI: 10.1080/00207217.2013.792121.

### Object and summary

The present invention is defined in the appended independent claims to which reference should be made. Advantageous features are set out in the appended dependent claims.

### Brief description of the drawings

One or more embodiments will now be described, merely by way of example, with reference to the annexed drawings, wherein:
Figure 1 is a block circuit diagram exemplary of an apparatus according to an embodiment of the present disclosure;
Figure 2 is a block circuit diagram exemplary of a control station for use in the apparatus of Figure 1 ;
Figure 3 is a block circuit diagram exemplary of a utilizer device for use in the apparatus of Figure 1 ; and
Figure 4 is a diagram exemplary of a possible circuit configuration for a communication protocol in various embodiments.

### Detailed description

In the ensuing description one or more specific details are illustrated, aimed at providing an in-depth understanding of examples of embodiments of the description. The embodiments may be obtained without one or more of the specific details, or with other methods, components, materials, etc. In other cases, known structures, materials, or operations are not illustrated or described in detail so that certain aspects of the embodiments will not be obscured.

Reference to "an embodiment" or "one embodiment" in the framework of the present description is meant to indicate that a particular configuration, structure, or characteristic described in relation to the embodiment is comprised in at least one embodiment. Consequently, phrases such as "in an embodiment" or "in one embodiment" that may be present in one or more points of the present description do not necessarily refer to one and to the same embodiment.

Moreover, particular conformations, structures, or characteristics may be combined in any suitable way in one or more embodiments.

The references used herein are provided merely for convenience and consequently do not define the extent of protection or the scope of the embodiments.

In the annexed figures, similar parts or elements are designated by similar references, and a corresponding description will not be repeated for reasons of brevity.

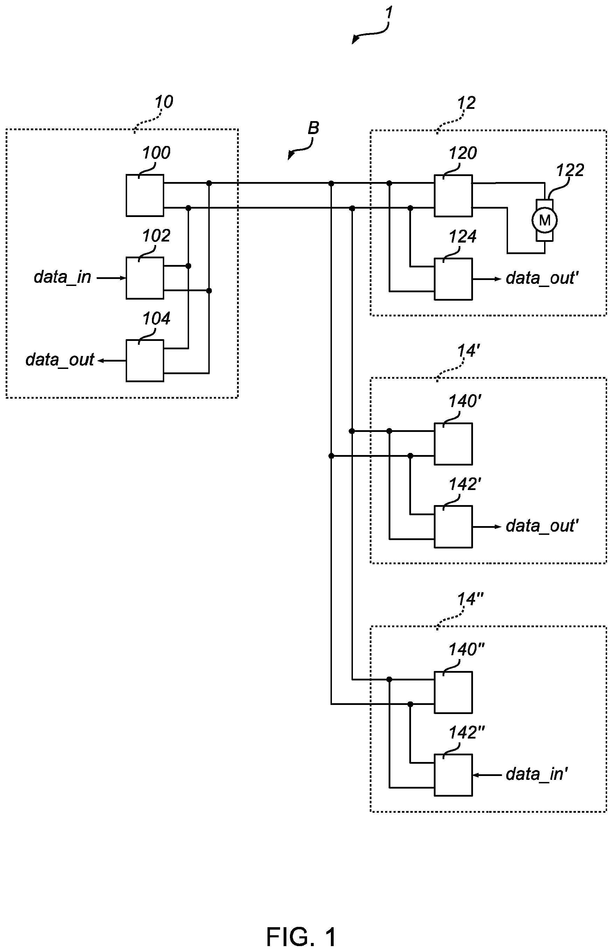

In Figure 1 , reference 1 designates as a whole an apparatus for moving a closing barrier, preferably for moving a door or a gate.

Similarly to known solutions, the apparatus 1 comprises a control station 10 of the apparatus, which supplies a PWM supply voltage to a two-wire communication and supply bus B. The apparatus 1 also comprises at least one utilizer device 12 that uses the above PWM supply voltage and is coupled to the bus B.

In particular, the control station 10 comprises a supply circuit 100 coupled to the bus B for generating a PWM voltage. The PWM voltage may be suitable to drive an electric drive, such as an electric motor for opening or closing a gate, or a door or window, comprised in the utilizer device 12. For instance, the PWM voltage may have a frequency of some tens of kilohertz, preferably between 1 kHz and 100 kHz, and a peak-to-peak amplitude greater than 10 V, preferably between 40 V and 50 V. The utilizer device 12, in particular an electric motor, may typically operate with a PWM supply voltage of 24 V.

The utilizer device 12 thus comprises a conversion circuit 120 for converting the PWM voltage into a supply current for an electric drive 122, here exemplified as an electric motor M.

The apparatus according to the present invention is characterized in that, in addition to the PWM supply voltage, the bus B also carries an amplitude-modulated signal, preferably an ASK-modulated signal, which is superimposed on the PWM voltage for transmitting/receiving commands and/or data, for example by encoding appropriate messages according to a communication protocol.

For this purpose, as exemplified in Figure 1 , the control station 10 comprises a circuit 102 for amplitude modulation of an amplitude-modulated data communication signal that is superimposed on the PWM supply voltage for transmitting signals (i.e., data and/or commands) on the communication and supply bus B. For instance, these signals can transmit on the bus B (for example, from the control station 10 to the utilizer device 12) information corresponding to the data data in received by the control station 10.

For instance, the control station 10 can receive from a wireless transmitter (not visible in the annexed figures) a command data in that enables opening of an automated gate 12, or else the control station 10 can generate a command for a peripheral device associated to the automated gate 12 such as a warning flasher lamp, and encode via the amplitude-modulation circuit 102 a corresponding signal, which is transmitted on the bus B and co-exists with the PWM supply voltage.

The utilizer device 12 thus comprises a circuit 124 for amplitude demodulation of the amplitude-modulated data communication signal for receiving signals (i.e., commands and/or data) from the control station 10 via the communication and supply bus B.

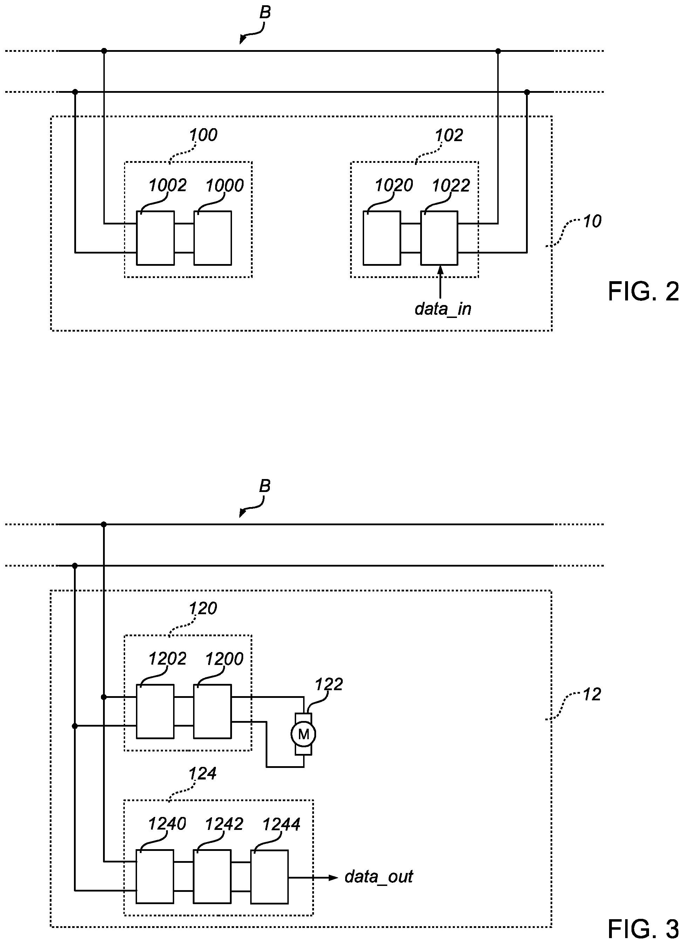

Figure 2 is a block diagram exemplary of a control station 10 for use in an apparatus as exemplified in Figure 1 .

In the example described herein, the PWM voltage generation circuit 100 comprises a PWM voltage generation circuit block 1000 coupled to the bus B via an inductive choke filter 1002. The filter 1002 may comprise a first inductive component coupled in series to a first line of the two-wire bus B, and a second inductive component coupled in series to a second line of the two-wire bus B. The value of inductance of each of the aforesaid two inductive components may be determined as a function of the supply current required on the bus B. For instance, each of the above inductive components may have a value of inductance of approximately 100 µH and a current capacity of some tens of amps.

Once again with reference to the example of Figure 2 , the amplitude modulation circuit 102 comprises a circuit 1020 for generating a carrier signal and a circuit 1022 for amplitude modulation of the above carrier signal, which is coupled to the generator circuit 1020. The carrier signal generated by the generator circuit 1020 may have, for example, a frequency of between 1 MHz and 10 MHz, preferably 2.5 MHz. The modulator circuit 1022 may comprise an ASK modulator, which applies an amplitude modulation to the carrier signal for encoding therein commands and/or data that represent a received flow of data data in. In various embodiments, the rate of the data transmission channel may be equal to 38400 baud, resulting in a data flow that is sufficiently fast for home automation applications.

In the example described herein, the amplitude modulation circuit 102 may be capacitively coupled to the supply and communication bus B via two line drivers (not visible in the figures), which amplify the modulated signal in order to provide a signal intensity that is sufficient to cover the distance of the entire bus B, also as a function of the number of utilizer devices 12 and/or of peripheral devices connected to the bus B, which may be present in a number greater than one.

In the absence of a data flow data in, the aforementioned line drivers can switch to a high-impedance state, thus preventing loading of the bus B from the electrical standpoint (i.e., preventing absorption of current from the bus).

With reference to Figure 3 , the PWM voltage conversion circuit 120 in the utilizer device 12 may comprise a PWM voltage conversion circuit block 1200 coupled to the bus B via an inductive choke filter 1202. In particular, the PWM voltage conversion circuit block 1200 may comprise a rectifier circuit in itself known, such as a bridge or half-bridge rectifier, and possibly a regulator circuit, which supplies at output a current for supplying the utilizer device 12, in particular the electric motor 122. The filter 1202 may be structurally similar to the filter 1002 described previously and sized according to similar criteria.

In alternative embodiments, the PWM voltage conversion circuit 120 in the utilizer device 12 may comprise a direct coupling of the electric motor 122 to the bus B in order to receive the PWM voltage directly therefrom.

Once again with reference to the example of Figure 3 , the amplitude demodulation circuit 124 comprises a band-pass filter 1240 having a central frequency equal to the frequency of the carrier signal transmitted on the bus B (for example, 2.5 MHz), an envelope detector circuit 1242, and a discriminating and squaring circuit 1244.

The band-pass filter 1240 performs a high-pass function in order to remove any possible disturbance in the PWM signal that may be induced or conducted by the bus B, and a low-pass function in order to reduce any possible distortion proper to the amplitude-modulated signal, which is superimposed on a PWM supply voltage.

In particular, in various preferred embodiments, the band-pass filter 1240 comprises a filter of a passive analog type, for example an 8-pole filter. Use of a passive filter makes it easier to prevent effects of saturation that might arise due to the amplitude of the PWM voltage. Even more preferably, the band-pass filter 1240 comprises a first 5-pole high-pass filter circuit block and a second 3-pole low-pass filter circuit block.

The envelope-detector circuit 1242 and the discriminating and squaring circuit 1244 square the signal at output from the band-pass filter 1240 and amplify it to a level that enables amplitude detection thereof, for example via two peak detectors that comprise diodes and capacitances and have different time constants.

A first peak detector may have a longer time constant, for example approximately 10 times the period of the data in the data flow data in, so as to follow the plot of the mean amplitude of the received signal.

A second peak detector may have a shorter time constant, for example sufficient to remove the carrier so as to follow the envelope of the modulated signal.

The signals supplied at output by the two peak detectors are then transmitted to the inputs of a comparator, the comparison threshold of which is given by the value of the signal generated at output from the first peak detector and which supplies at output a signal data out that represents the signal data in, in particular a squared signal representing the plot of the envelope of the modulated signal.

The above signal data out may hence comprise, for example, a command for enabling the electric motor 122, or else a command for a peripheral associated to the utilizer device 12, such as a warning flasher lamp or the like.

In brief, the utilizer device 12 may comprise a peripheral device (e.g., an actuator), for example a warning flasher lamp or a lighting element associated to the utilizer device, and the ASK encoded signals received by the utilizer device 12 through the bus B may comprise commands both for the utilizer device 12 and for a peripheral device associated thereto or integrated therein.

In preferred embodiments, the movement apparatus 1 may also comprise one or more peripheral devices (for example, once again actuators) 14', which are located in the proximity of the utilizer device 12 and are coupled to the communication and supply bus B. In general, the expression "located in the proximity of the utilizer device 12" referred to the above devices 14' is meant to indicate that the length of the bus B between each device 14' and the device 12 is less than the length between the device 12 and the control station 10.

In the case where one or more peripheral devices 14' are present, separate from the utilizer device 12, each of the aforesaid peripheral devices 14' comprises a respective circuit 142' for amplitude demodulation of the amplitude-modulated data communication signal for receiving signals from the bus B, as illustrated once again in Figure 1 . An amplitude demodulation circuit 142' generates at output a data flow data out' that may contain, for example, actuation commands directed at the respective peripheral device 14'.

An amplitude demodulation circuit 142' may be structurally and functionally similar to an amplitude demodulation circuit 124 as described previously.

Each peripheral device 14' may be supplied autonomously (for example, by a battery or with a dedicated connection to a domestic power mains supply), but preferably comprises a supply circuit 140' coupled to the bus B that may be structurally and functionally similar to a PWM voltage conversion circuit 120, as described previously.

Additionally or alternatively, the supply circuit 100 in the control station 10 may comprise a circuit for supplying a DC or AC current for supplying one or more peripheral devices 14', this current being also supplied to the two-wire bus B. In this case, the supply circuit 140' in the peripheral device 14' may convert the DC or AC current received from the bus B into a current for supplying the peripheral device 14', for example via a rectifier circuit of a known type.

Purely by way of illustrative example, a peripheral device 14' may comprise an electrically operated lock, a flasher lamp, a stop-and-go light, or a lighting device.

The examples of embodiments so far described are characterized by a communication of the bus B of a unidirectional type, where signals are transmitted on the bus from the control station 10 to the utilizer device 12 and/or to possible peripheral devices 14'.

In further preferred embodiments, the movement apparatus 1 comprises at least one peripheral device (e.g., a sensor) 14". This peripheral device 14" may be located in the proximity of the utilizer device 12 and coupled to the communication and supply bus B, or else may be integrated in the utilizer device 12. It will be noted that, in the context of the present description, included in the definition of "sensor devices" are also data-input devices, and in general any device that generates an output signal representing a certain flow of data received and/or detected.

Consequently, as exemplified in Figure 1 , a peripheral device 14" comprises a circuit 142" for amplitude modulation of an amplitude-modulated data communication signal for transmitting signals on the communication and supply bus B. In order to co-operate with one or more devices 14" connected on the bus B, the control station 10 comprises a circuit 104 for amplitude demodulation of the amplitude-modulated data communication signal for receiving signals transmitted on the bus B by one or more devices 14".

The signals received by the control station 10 from the bus B may comprise data detected, and/or received, and/or generated by the peripheral device 14". Consequently, some examples of embodiments are characterized by communication of the bus B of a bi-directional type, where signals are transmitted on the bus from one or more peripheral devices 14" to the control station 10. Purely by way of illustrative example, a peripheral device 14" may comprise at least one of the following:a pushbutton panel;a data input device, such as an alphanumeric keypad;a radio receiver module;a sensor for detecting obstacles; anda presence sensor.

The amplitude demodulation circuit 104 in the control station 10 may be structurally and functionally similar to the amplitude demodulation circuit 124 in the utilizer device 12, and consequently may comprise a band-pass filter having a central frequency equal to the frequency of the carrier signal transmitted on the bus B (for example, 2.5 MHz), an envelope-detector circuit, and a discriminating and squaring circuit.

Likewise, the amplitude modulation circuit 142" in the peripheral device 14" may be structurally and functionally similar to the amplitude modulation circuit 102 in the control station 10, and consequently may comprise a circuit for generation of a carrier signal and a circuit for amplitude modulation of the carrier signal, coupled to the generator circuit.

As described previously in relation to the peripheral devices 14', also each peripheral device 14" may be supplied autonomously (for example, by a battery or with a dedicated connection to a domestic power mains supply), but preferably comprises a supply circuit 140" coupled to the bus B that may be structurally and functionally similar to a PWM voltage conversion circuit 120, as described previously.

Also in the case of an apparatus comprising one or more peripheral devices 14", the supply circuit 100 in the control station 10 may comprise a circuit for supplying a DC or AC current for supplying the peripheral devices 14" through the two-wire bus B. In this case, the supply circuit 140" in the peripheral device 14" may convert the aforesaid DC or AC current received from the bus B into a current for supplying the peripheral device 14", for example via a rectifier circuit of a known type.

In various embodiments of an apparatus 1 comprising a control station 10, a utilizer device 12 and one or more sensor devices and/or actuators (for example, 14' and/or 14"), the communication and supply bus B may have a star, ring, or branched configuration.

In various embodiments, the transmission of signals via amplitude modulation (preferably, of an ASK type) of a carrier signal on the supply and communication bus B may comprise implementation of a packet transmission protocol of an ARQ (Automatic Repeat-reQuest) type, for example an X.25 protocol known per se.

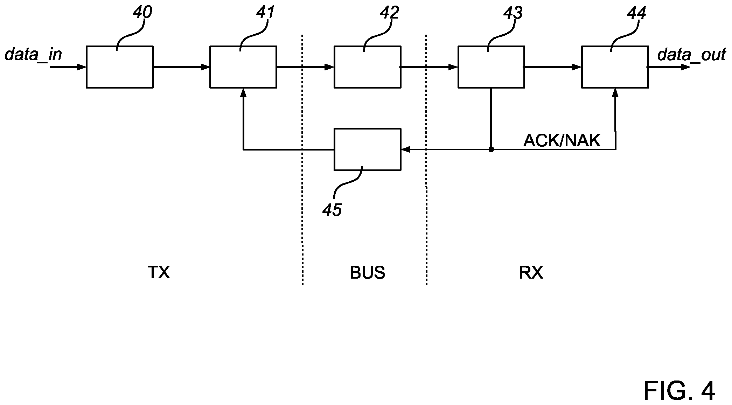

Figure 4 exemplifies an operating flow of a protocol of an X.25 type with ARQ, where a flow of input data data in is encoded, in a transmitter device TX (for example, the control station 10), by an ASK encoder block 40. The encoded data provided at output by the encoder block 40 are supplied to an input buffer 41 of the bus B, and a controller enables forward transmission thereof on the bus B, exemplified by block 42. The encoded data are received in a receiver device RX (for example, a utilizer device 12), where they are decoded by a decoder block 43 and supplied to an output buffer 44 of the bus B. In the case of a bi-directional communication, a controller in the receiver device RX controls a reverse transmission on the bus B from the receiver device RX to the transmitter device TX, exemplified by block 45.

In various preferred embodiments, a carrier signal generator may generate a plurality of carrier signals at different frequencies. In this case, the receiver devices coupled to the bus B may comprise band-pass filters centred at one or more of the aforesaid carrier frequencies for enabling transmission of commands and/or data of a multi-channel type on a single two-wire bus B.

It will be noted that the example considered herein, regarding an automation for gates or doors or windows in general, is to be understood as in no way limiting the embodiments of the present disclosure.

The references used herein have been provided merely for convenience and hence do not define the sphere of protection or the scope of the embodiments. Without prejudice to the underlying principles, the details and the embodiments may vary even considerably, with respect to what has been described purely by way of example, without thereby departing from the scope of protection of the invention, as defined in the annexed claims.

## Claims

1. An apparatus (1) for moving a closing barrier, in particular for moving a door or a gate, the apparatus comprising:
- a control station (10) comprising a supply circuit (100) for supplying a Pulse-Width Modulated, PWM, supply voltage to a two-wire communication and supply bus (B) that is coupled to said control station (10); and
- at least one utilizer device (12) configured to use said PWM supply voltage and is coupled to said two-wire communication and supply bus (B), said utilizer device (12)
comprising a conversion circuit (120) for converting said PWM supply voltage into a supply current for an electric motor (122) for movement of said closing barrier,
wherein said control station (10) further comprises an amplitude modulation circuit (102) for transmitting an amplitude-modulated data communication signal superimposed on said PWM supply voltage onto said communication and supply bus (B), wherein said amplitude modulation circuit (102) comprises a circuit (1020) for generating a carrier signal and a circuit (1022) for amplitude modulation of said carrier signal, which is coupled the generator circuit (1020), in that said at least one utilizer device (12) that is configured to use said PWM supply voltage is coupled to a circuit (124) for amplitude demodulation of said amplitude-modulated data communication signal for receiving signals from said communication and supply bus (B),
wherein said signals received at said utilizer device (12) from said communication and supply bus (B) comprise commands for moving said closing barrier; the apparatus is **characterized in that**:
- said supply circuit (100) for supplying said PWM supply voltage and said conversion circuit (120) for converting said PWM supply voltage are coupled to the communication and supply bus (B) via respective choke filters (1002; 1202); and
- said amplitude demodulation circuit (124; 142'; 104) comprises a band-pass filter (1240) having a central frequency equal to the frequency of said carrier signal, an envelope-detector circuit (1242) and a discriminating and squaring circuit (1244).

2. The apparatus (1) for moving a closing barrier according to claim 1, wherein said utilizer device (12) comprises at least one peripheral device, and wherein in particular said signals received at said utilizer device (12) from said communication and supply bus (B) comprise commands for said peripheral device.

3. The apparatus (1) for moving a closing barrier according to any of the preceding claims, comprising at least one peripheral device (14'), which is located in the proximity of said utilizer device (12) and is coupled to said communication and supply bus (B), wherein:
- said supply circuit (100) in said control station (10) comprises a circuit for supplying a DC or AC current to said two-wire communication and a bi-directional supply bus (B); and
- said peripheral device (14') comprises a conversion circuit (140') for converting said PWM supply voltage or said DC or AC current into a current for supplying the peripheral device (14'), and a circuit (142') for amplitude demodulation of said amplitude-modulated data communication signal for receiving signals from said communication and supply bus (B),
and wherein in particular said signals received by said peripheral device (14') located in the proximity of said utilizer device (12) from said communication and supply bus (B) comprise commands for said peripheral device (14').

4. The apparatus (1) for moving a closing barrier according to claim 2 or claim 3, wherein said at least one peripheral device (14') comprises at least one of the following:
- an electrically operated lock;
- a flasher lamp and/or a stop-and-go light; and
- a lighting device.

5. The apparatus (1) for moving a closing barrier according to any of the preceding claims, comprising at least one signal transmitter peripheral device (14") integrated in said utilizer device (12) or located in the proximity of said utilizer device (12) and coupled to said communication and supply bus (B), wherein:
- said supply circuit (100) in said control station (10) comprises a circuit for supplying a DC or AC current to said two-wire communication and supply bus (B); and
- said signal transmitter peripheral device (14") comprises a conversion circuit (140") for converting said PWM supply voltage or said DC or AC current into a current for supplying the signal transmitter peripheral device (14"), and a circuit (142") for amplitude modulation of said amplitude-modulated data communication signal for transmitting signals on said communication and supply bus (B),
and wherein said control station (10) comprises a circuit (104) for amplitude demodulation of said amplitude-modulated data communication signal for receiving signals transmitted on said communication and supply bus (B) by said at least one signal transmitter peripheral device (14"),
and wherein in particular said signals received by said control station (10) from said communication and supply bus (B) comprise data detected by said at least one signal transmitter peripheral device (14").

6. The apparatus (1) for moving a closing barrier according to claim 5, wherein said at least one signal transmitter peripheral device (14") comprises at least one of the following:
- a pushbutton panel;
- a data input device, preferably an alphanumeric keypad;
- a radio receiver module;
- a sensor for detecting obstacles; and
- a presence sensor.

7. The apparatus (1) for moving a closing barrier according to any of the preceding claims, wherein said PWM supply voltage has a frequency comprised between 1 kHz and 100 kHz, and a peak-to-peak amplitude greater than 10 V, preferably comprised between 40 V and 50 V.

8. The apparatus (1) for moving a closing barrier according to any of the preceding claims, wherein said electric motor (122) for movement of said closing barrier is an electric motor supplied with a voltage between 10 V and 50 V, preferably 24 V.

9. The apparatus (1) for moving a closing barrier according to claim 1, wherein said band-pass filter (1240) comprises a filter of a passive analog type, preferably of an 8-pole type, more preferably comprising a first 5-pole high-pass filter circuit block and a second 3-pole low-pass-filter circuit block.

10. The apparatus (1) for moving a closing barrier according to claim 1 or 9, wherein said carrier signal generator (1020) generates a carrier signal having a frequency comprised between 1 MHz and 10 MHz, preferably 2.5 MHz.

11. The apparatus (1) for moving a closing barrier according to any of the preceding claims, wherein said circuit (102; 142") for amplitude modulation of said amplitude-modulated data communication signal comprises an Amplitude-Shift-Keying, ASK, modulator circuit that applies a modulation of an ASK type to said amplitude-modulated data communication signal superimposed on said PWM supply voltage.

12. Method of operating the apparatus (1) according to any of the preceding claims, the method comprising:
- supplying by means of the supply circuit (100) a Pulse-Width Modulated, PWM, supply voltage to said two-wire communication and supply bus (B) via said control station (10);
- receiving said PWM supply voltage at said at least one utilizer device (12) coupled to said two-wire communication and supply bus (B), and converting (120) said
PWM supply voltage into a supply current for an electric motor (122) for movement of said closing barrier;
- transmitting by means of the amplitude modulation circuit (102) onto said communication and supply bus (B), from said control station (10), an amplitude-modulated data communication signal superimposed on said PWM supply voltage; and
- receiving said amplitude-modulated data communication signal at said least one utilizer device (12), and demodulating (124) said amplitude-modulated data communication signal for receiving signals from said communication and supply bus (B), wherein said signals received at said utilizer device (12) from said communication and supply bus (B) comprise commands for moving said closing barrier.

## Patentansprüche

1. Vorrichtung (1) zum Bewegen einer Verschlussbarriere, insbesondere zum Bewegen einer Tür oder eines Tors, wobei die Vorrichtung umfasst:
- eine Steuerstation (10) umfassend eine Versorgungsschaltung (100) zum Versorgen eines Zweileiter-Kommunikations- und Versorgungsbusses (B), der mit der genannten Steuerstation (10) gekoppelt ist, mit einer pulsweitenmodulierten, PWM-, Versorgungsspannung; und
- zumindest ein Benutzergerät (12), das dafür ausgelegt ist, die genannte PWM-Versorgungsspannung zu benutzen und mit dem genannten Zweileiter-Kommunikations- und Versorgungsbus (B) gekoppelt ist, wobei das genannte Benutzergerät (12) eine Umwandlungsschaltung (120) zur Umwandlung der genannten PWM-Versorgungsspannung in einen Versorgungsstrom für einen Elektromotor (122) zur Bewegung der genannten Verschlussbarriere umfasst,
worin die genannte Steuerstation (10) ferner eine Amplitudenmodulationsschaltung (102) zum Übertragen eines amplitudenmodulierten Datenkommunikationssignals umfasst, das der genannten PWM-Versorgungsspannung überlagert ist, am genannten Kommunikations- und Versorgungsbus (B), worin die genannte Amplitudenmodulationsschaltung (102) eine Schaltung (1020) zum Erzeugen eines Trägersignals und eine Schaltung (1022) zur Amplitudenmodulation des genannten Trägersignals umfasst, die mit der Generatorschaltung (1020) gekoppelt ist,
worin das genannte zumindest eine Benutzergerät (12), das dafür ausgelegt ist, die genannte PWM-Versorgungsspannung zu benutzen, mit einer Schaltung (124) zur Amplitudendemodulation des genannten amplitudenmodulierten Datenkommunikationssignals zum Empfangen von Signalen von dem genannten Kommunikations- und Versorgungsbus (B) gekoppelt ist,
worin die genannten Signale, die am genannten Benutzergerät (12) vom genannten Kommunikations- und Versorgungsbus (B) empfangen werden, Befehle zum Bewegen der genannten Verschlussbarriere umfassen; die Vorrichtung **dadurch gekennzeichnet ist, dass**:
- die genannte Versorgungsschaltung (100) zur Versorgung mit der genannten PWM-Versorgungsspannung und die genannte Umwandlungsschaltung (120) zur Umwandlung der genannten PWM-Versorgungsspannung mit dem Kommunikations- und Versorgungsbus (B) über jeweilige Drosselfilter (1002; 1202) gekoppelt sind; und
- die genannte Amplitudendemodulationsschaltung (124; 142'; 104) ein Bandpassfilter (1240), das eine zentrale Frequenz hat, die der Frequenz des genannten Trägersignals gleich ist, eine Hülle-Detektorschaltung (1242) und eine Diskriminierungs- und Quadrierungsschaltung (1244) umfasst.

2. Vorrichtung (1) zum Bewegen einer Verschlussbarriere nach Anspruch 1, worin das genannte Benutzergerät (12) zumindest ein Peripheriegerät umfasst, und worin insbesondere die genannten Signale, die am genannten Benutzergerät (12) vom genannten Kommunikations- und Versorgungsbus (B) empfangen werden, Befehle für das genannte Peripheriegerät umfassen.

3. Vorrichtung (1) zum Bewegen einer Verschlussbarriere nach einem der vorhergehenden Ansprüche, umfassend zumindest ein Peripheriegerät (14'), das in der Nähe des genannten Benutzergeräts (12) gelegen ist und mit dem genannten Kommunikations- und Versorgungsbus (B) gekoppelt ist, worin:
- die genannte Versorgungsschaltung (100) in der genannten Steuerstation (10) eine Schaltung zur Versorgung des genannten Zweileiter-Kommunikationsbusses und eines bidirektionalen Versorgungsbusses (B) mit einem Gleichstrom oder einem Wechselstrom umfasst; und
- das genannte Peripheriegerät (14') eine Umwandlungsschaltung (140') zur Umwandlung der genannten PWM-Versorgungsspannung oder des genannten Gleichstroms oder Wechselstroms in einen Strom zur Versorgung des Peripheriegeräts (14') und eine Schaltung (142') zur Amplitudendemodulation des genannten amplitudenmodulierten Datenkommunikationssignals zum Empfangen von Signalen von dem genannten Kommunikations- und Versorgungsbus (B) umfasst, und worin insbesondere die genannten Signale, die vom genannten Peripheriegerät (14'), das in der Nähe des genannten Benutzergeräts (12) gelegen ist, vom genannten Kommunikations- und Versorgungsbus (B) empfangen werden, Befehle für das genannte Peripheriegerät (14') umfassen.

4. Vorrichtung (1) zum Bewegen einer Verschlussbarriere nach Anspruch 2 oder nach Anspruch 3, worin das genannte zumindest eine Peripheriegerät (14') zumindest eine/eines von folgenden umfasst:
- ein elektrisch betriebenes Türschloss;
- eine Blinkleuchte und/oder ein Stopp-und-Go-Licht; und
- eine Beleuchtungsvorrichtung.

5. Vorrichtung (1) zum Bewegen einer Verschlussbarriere nach einem der vorhergehenden Ansprüche, umfassend zumindest ein Signalübertragungs-Peripheriegerät (14"), das in das genannte Benutzergerät (12) integriert ist oder in der Nähe des genannten Benutzergeräts (12) gelegen ist und mit dem genannten Kommunikations- und Versorgungsbus (B) gekoppelt ist, worin:
- die genannte Versorgungsschaltung (100) in der genannten Steuerstation (10) eine Schaltung zur Versorgung des genannten Zweileiter-Kommunikationsbusses und Versorgungsbusses (B) mit einem Gleichstrom oder einem Wechselstrom umfasst; und
- das genannte Signalübertragungs-Peripheriegerät (14") eine Umwandlungsschaltung (140") zur Umwandlung der genannten PWM-Versorgungsspannung oder des genannten Gleichstroms oder Wechselstroms in einen Strom zur Versorgung des Signalübertragungs-Peripheriegeräts (14") und eine Schaltung (142") zur Amplitudenmodulation des genannten amplitudenmodulierten Datenkommunikationssignals zum Übertragen von Signalen an dem genannten Kommunikations- und Versorgungsbus (B) umfasst,
und worin die genannte Steuerstation (10) eine Schaltung (104) zur Amplitudendemodulation des genannten amplitudenmodulierten Datenkommunikationssignals zum Empfangen von Signalen, die an dem genannten Kommunikations- und Versorgungsbus (B) von dem genannten zumindest einen Signalübertragungs-Peripheriegerät (14") übertragen sind, umfasst,
und worin insbesondere die genannten Signale, die von der genannten Steuerstation (10) vom genannten Kommunikations- und Versorgungsbus (B) empfangen werden, Daten umfassen, die vom genannten zumindest einen Signalübertragungs-Peripheriegerät (14") detektiert werden.

6. Vorrichtung (1) zum Bewegen einer Verschlussbarriere nach Anspruch 5, worin das genannte zumindest eine Signalübertragungs-Peripheriegerät (14") zumindest einen/eine/eines von folgenden umfasst:
- eine Druckknopftafel;
- ein Dateneingabegerät, vorzugsweise eine alphanumerische Tastatur;
- ein Funkempfängermodul;
- einen Sensor zum Detektieren von Hindernissen; und
- einen Präsenzsensor.

7. Vorrichtung (1) zum Bewegen einer Verschlussbarriere nach einem der vorhergehenden Ansprüche, worin die genannte PWM-Versorgungsspannung eine Frequenz zwischen 1 kHz und 100 kHz und eine Spitzen-Spitzen-Amplitude größer als 10 V, vorzugsweise zwischen 40 V und 50 V, hat.

8. Vorrichtung (1) zum Bewegen einer Verschlussbarriere nach einem der vorhergehenden Ansprüche, worin der genannte Elektromotor (122) zur Bewegung der genannten Verschlussbarriere ein Elektromotor ist, der mit einer Spannung zwischen 10 V und 50 V, vorzugsweise von 24 V, versorgt wird.

9. Vorrichtung (1) zum Bewegen einer Verschlussbarriere nach Anspruch 1, worin das genannte Bandpassfilter (1240) ein Filter einer passiven analogen Art, bevorzugt einer 8-poligen Art, umfasst, in bevorzugterer Weise umfassend einen ersten 5-poligen Hochpassfilter-Schaltungsblock und einen zweiten 3-poligen Tiefpassfilter-Schaltungsblock.

10. Vorrichtung (1) zum Bewegen einer Verschlussbarriere nach Anspruch 1 oder 9, worin der genannte Trägersignalgenerator (1020) ein Trägersignal erzeugt, das eine Frequenz zwischen 1 MHz und 10 MHz, vorzugsweise von 2,5 MHz, hat.

11. Vorrichtung (1) zum Bewegen einer Verschlussbarriere nach einem der vorhergehenden Ansprüche, worin die genannte Schaltung (102; 142") zur Amplitudenmodulation des genannten amplitudenmodulierten Datenkommunikationssignals eine Amplitudenumtastungs-, ASK, Modulatorschaltung umfasst, die eine Modulation einer ASK-Art auf das genannte amplitudenmodulierte Datenkommunikationssignal anwendet, das der genannten PWM-Versorgungsspannung überlagert ist.

12. Verfahren zum Betreiben der Vorrichtung (1) nach einem der vorhergehenden Ansprüche, wobei das Verfahren umfasst:
- Versorgen, mittels der Versorgungsschaltung (100), des genannten Zweileiter-Kommunikations- und Versorgungsbusses (B) mit einer pulsweitenmodulierten, PWM-, Versorgungsspannung über die genannte Steuerstation (10);
- Empfangen der genannten PWM-Versorgungsspannung am genannten zumindest einem Benutzergerät (12), das mit dem genannten Zweileiter-Kommunikations- und Versorgungsbus (B) gekoppelt ist, und Umwandeln (120) der genannten PWM-Versorgungsspannung in einen Versorgungsstrom für einen Elektromotor (122) zur Bewegung der genannten Verschlussbarriere;
- Übertragen mittels der Amplitudenmodulationsschaltung (102) am genannten Kommunikations- und Versorgungsbus (B), von der genannten Steuerstation (10), eines amplitudenmodulierten Datenkommunikationssignals, das der genannten PWM-Versorgungsspannung überlagert ist; und
- Empfangen des genannten amplitudenmodulierten Datenkommunikationssignals an dem genannten zumindest einen Benutzergerät (12), und Demodulieren (124) des genannten amplitudenmodulierten Datenkommunikationssignals zum Empfangen von Signalen von dem genannten Kommunikations- und Versorgungsbus (B), worin die genannten Signale, die am genannten Benutzergerät (12) vom genannten Kommunikations- und Versorgungsbus (B) empfangen werden, Befehle zum Bewegen der genannten Verschlussbarriere umfassen.

## Revendications

1. Un appareil (1) pour déplacer une barrière de fermeture, notamment pour déplacer une porte ou un portail, l'appareil comprenant :
- une station de commande (10) comprenant un circuit d'alimentation (100) pour fournir une tension d'alimentation modulée en largeur d'impulsion, en abrégé PWM, à un bus de communication et d'alimentation à deux fils (B) qui est relié à ladite station de commande (10) ; et
- au moins un dispositif utilisateur (12) configuré pour utiliser ladite tension d'alimentation PWM et est relié audit bus de communication et d'alimentation à deux fils (B), ledit dispositif utilisateur (12) comprenant un circuit de conversion (120) pour convertir ladite tension d'alimentation PWM en un courant d'alimentation pour un moteur électrique (122) pour le mouvement de ladite barrière de fermeture,
ladite station de commande (10) comprenant en outre un circuit de modulation d'amplitude (102) pour transmettre un signal de communication de données modulé en amplitude superposé à ladite tension d'alimentation PWM sur ledit bus de communication et d'alimentation (B), ledit circuit de modulation d'amplitude (102) comprenant un circuit (1020) pour générer un signal porteur et un circuit (1022) pour la modulation d'amplitude dudit signal porteur, qui est relié au circuit générateur (1020),
en ce que ledit au moins un dispositif utilisateur (12) qui est configuré pour utiliser ladite tension d'alimentation PWM est relié à un circuit (124) pour la démodulation d'amplitude dudit signal de communication de données modulé en amplitude pour recevoir des signaux provenant dudit bus de communication et d'alimentation (B),
lesdits signaux reçus au niveau dudit dispositif utilisateur (12) en provenance dudit bus de communication et d'alimentation (B) comprenant des commandes pour déplacer ladite barrière de fermeture ;
l'appareil est **caractérisé en ce que** :
- ledit circuit d'alimentation (100) pour fournir ladite tension d'alimentation PWM et ledit circuit de conversion (120) pour convertir ladite tension d'alimentation PWM sont reliés au bus de communication et d'alimentation (B) via des filtres atténuateurs respectifs (1002 ; 1202) ; et
- ledit circuit de démodulation d'amplitude (124 ; 142' ; 104) comprend un filtre passe-bande (1240) ayant une fréquence centrale égale à la fréquence dudit signal porteur, un circuit détecteur d'enveloppe (1242) et un circuit de discrimination et de quadrature (1244).

2. L'appareil (1) pour déplacer une barrière de fermeture selon la revendication 1, dans lequel ledit dispositif utilisateur (12) comprend au moins un dispositif périphérique, et dans lequel en particulier lesdits signaux reçus au niveau dudit dispositif utilisateur (12) à partir dudit bus de communication et d'alimentation (B) comprennent des commandes pour ledit dispositif périphérique.

3. L'appareil (1) pour déplacer une barrière de fermeture selon l'une quelconque des revendications précédentes, comprenant au moins un dispositif périphérique (14'), qui est situé à proximité dudit dispositif utilisateur (12) et est relié audit bus de communication et d'alimentation (B), dans lequel :
- ledit circuit d'alimentation (100) dans ladite station de commande (10) comprend un circuit pour fournir un courant continu ou alternatif audit bus d'alimentation et de communication (B) à deux fils ; et
- ledit dispositif périphérique (14') comprend un circuit de conversion (140') pour convertir ladite tension d'alimentation PWM ou ledit courant continu ou alternatif en un courant pour alimenter le dispositif périphérique (14'), et un circuit (142') pour une démodulation d'amplitude dudit signal de communication de données modulé en amplitude afin de recevoir des signaux en provenance dudit bus de communication et d'alimentation (B),
et dans lequel en particulier lesdits signaux reçus par ledit dispositif périphérique (14') situé à proximité dudit dispositif utilisateur (12) en provenance dudit bus de communication et d'alimentation (B) comprennent des commandes pour ledit dispositif périphérique (14').

4. L'appareil (1) pour déplacer une barrière de fermeture selon la revendication 2 ou la revendication 3, dans lequel ledit au moins un dispositif périphérique (14') comprend au moins un parmi ce qui suit :
- une serrure à commande électrique ;
- un feu clignotant et/ou un feu stop-and-go ; et
- un dispositif d'éclairage.

5. L'appareil (1) pour déplacer une barrière de fermeture selon l'une quelconque des revendications précédentes, comprenant au moins un dispositif périphérique (14") émetteur de signal intégré dans ledit dispositif utilisateur (12) ou situé à proximité dudit dispositif utilisateur (12) et relié audit bus de communication et d'alimentation (B) dans lequel :
- ledit circuit d'alimentation (100) dans ladite station de commande (10) comprend un circuit pour fournir un courant continu ou alternatif audit bus de communication et d'alimentation (B) à deux fils ; et
- ledit dispositif périphérique (14") émetteur de signal comprend un circuit de conversion (140") pour convertir ladite tension d'alimentation PWM ou ledit courant continu ou alternatif en un courant pour alimenter le dispositif périphérique (14") émetteur de signal, et un circuit (142") pour la modulation d'amplitude dudit signal de communication de données modulé en amplitude afin de transmettre des signaux sur ledit bus de communication et d'alimentation (B),
et dans lequel ladite station de commande (10) comprend un circuit (104) pour la démodulation d'amplitude dudit signal de communication de données modulé en amplitude afin de recevoir des signaux transmis sur ledit bus de communication et d'alimentation (B) par ledit au moins un dispositif périphérique (14") émetteur de signal,
et dans lequel en particulier lesdits signaux reçus par ladite station de commande (10) depuis ledit bus de communication et d'alimentation (B) comprennent des données détectées par ledit au moins un dispositif périphérique (14") émetteur de signaux.

6. L'appareil (1) pour déplacer une barrière de fermeture selon la revendication 5, dans lequel ledit au moins un dispositif périphérique (14") émetteur de signal comprend au moins un parmi ce qui suit :
- un panneau à boutons poussoirs ;
- un dispositif de saisie de données, de préférence un clavier alphanumérique ;
- un module récepteur radio ;
- un capteur pour détecter des obstacles ; et
- un capteur de présence.

7. L'appareil (1) pour déplacer une barrière de fermeture selon l'une quelconque des revendications précédentes, dans lequel ladite tension d'alimentation PWM a une fréquence comprise entre 1 kHz et 100 kHz, et une amplitude crête à crête supérieure à 10 V, de préférence comprise entre 40 V et 50 V.

8. L'appareil (1) de déplacement d'une barrière de fermeture selon l'une quelconque des revendications précédentes, dans lequel ledit moteur électrique (122) de déplacement de ladite barrière de fermeture est un moteur électrique alimenté par une tension comprise entre 10 V et 50 V, de préférence de 24 V.

9. L'appareil (1) pour déplacer une barrière de fermeture selon la revendication 1, dans lequel ledit filtre passe-bande (1240) comprend un filtre de type analogique passif, de préférence de type à 8 pôles, de façon encore préférée comprenant un premier bloc de circuit de filtre passe-haut à 5 pôles et un deuxième bloc de circuit de filtre passe-bas à 3 pôles.

10. L'appareil (1) pour déplacer une barrière de fermeture selon la revendication 1 ou la revendication 9, dans lequel ledit générateur de signal porteur (1020) génère un signal porteur ayant une fréquence comprise entre 1 MHz et 10 MHz, de préférence de 2,5 MHz.

11. L'appareil (1) pour déplacer une barrière de fermeture selon l'une quelconque des revendications précédentes, dans lequel ledit circuit (102 ; 142") pour la modulation d'amplitude dudit signal de communication de données modulé en amplitude comprend un circuit modulateur à modulation par déplacement d'amplitude *("Amplitude-Shift-Keying"),* en abrégé ASK, qui applique une modulation de type ASK audit signal de communication de données modulé en amplitude superposé à ladite tension d'alimentation PWM.

12. Procédé de fonctionnement de l'appareil (1) selon l'une quelconque des revendications précédentes, le procédé comprenant :
- le fait de fournir au moyen du circuit d'alimentation (100) une tension d'alimentation modulée en largeur d'impulsion, en abrégé PWM, audit bus de communication et d'alimentation (B) à deux fils via ladite station de commande (10) ;
- le fait de recevoir ladite tension d'alimentation PWM au niveau dudit au moins un dispositif utilisateur (12) relié audit bus de communication et d'alimentation (B) à deux fils, et de convertir (120) ladite tension d'alimentation PWM en un courant d'alimentation pour un moteur électrique (122) pour le déplacement de ladite barrière de fermeture ;
- le fait de transmettre au moyen du circuit de modulation d'amplitude (102) sur ledit bus de communication et d'alimentation (B), depuis ladite station de commande (10), un signal de communication de données modulé en amplitude superposé à ladite tension d'alimentation PWM ; et
- le fait de recevoir ledit signal de communication de données modulé en amplitude au niveau dudit au moins un dispositif utilisateur (12), et de démoduler (124) ledit signal de communication de données modulé en amplitude pour recevoir des signaux en provenance dudit bus de communication et d'alimentation (B), lesdits signaux reçus au niveau dudit dispositif utilisateur (12) en provenance dudit bus de communication et d'alimentation (B) comprenant des commandes de déplacement de ladite barrière de fermeture.
